# FASCICULE DE BREVET EUROPEEN

(11) **EP 2 841 288 B1**
(45) Date de publication et mention de la délivrance du brevet: **12.06.2019**
(21) Numéro de dépôt: 13717508.9
(22) Date de dépôt: 19.04.2013
(51) Int. Cl.: H01M 10/625

(54) **INSTALLATION DE CHAUFFAGE, VENTILATION, ET/OU CLIMATISATION COMPORTANT UN DISPOSITIF DE RÉGULATION THERMIQUE D'UNE BATTERIE ET PROCÉDÉ DE MISE EN UVRE CORRESPONDANT**
HEIZUNGS-, BELÜFTUNGS- UND/ODER KLIMAANLAGE MIT EINER VORRICHTUNG ZUR STEUERUNG DER TEMPERATUR EINER BATTERIE UND VERFAHREN ZUR IMPLEMENTIERUNG DAVON
HEATING, VENTILATION AND/OR AIR-CONDITIONING EQUIPMENT COMPRISING A DEVICE FOR CONTROLLING THE TEMPERATURE OF A BATTERY, AND METHOD FOR IMPLEMENTING SAME

(30) Priorité: 24.04.2012 FR 1253763
(43) Date de publication de la demande: 04.03.2015
(73) Titulaire: Valeo Systemes Thermiques, 78321 Le Mesnil Saint Denis (FR)
(72) Inventeur: GUIGOU, Pascal, F-92260 Fontenay Aux Roses (FR); YAHIA, Mohamed, F-75005 Paris (FR)
(74) Mandataire: Metz, Gaëlle
(86) Numéro de dépôt international: PCT/EP2013/058204
(87) Numéro de publication internationale: WO 2013/160209

(56) Documents cités:
- DE-A1-102010 033 188
- DE-A1-102010 039 028
- FR-A1- 2 805 926
- FR-A1- 2 940 631
- US-A1- 2012 085 114

## Description

L'invention a pour objet une installation de chauffage, ventilation, et/ou climatisation comportant un dispositif de régulation thermique d'une batterie de véhicule automobile. L'invention est particulièrement adaptée pour une installation de chauffage, ventilation, et/ou climatisation comportant un dispositif de régulation thermique d'une batterie d'un véhicule automobile électrique ou hybride, tel que divulgué dans DE 10 2010 039028 A1.

L'invention a aussi pour objet un procédé de mise en oeuvre d'une telle installation de chauffage, ventilation, et/ou climatisation selon divers modes de fonctionnement.

Les véhicules automobiles, notamment les véhicules électriques ou hybrides dont la propulsion est assurée au moins partiellement par un moteur électrique, sont couramment équipés de composants électriques, tels que notamment un moteur électrique ou une batterie. Notamment, des cellules sont disposées en parallèles dans un boîtier de protection afin de former une batterie ou un pack batterie.

La charge et la décharge d'une batterie sont des processus exothermiques. Or, en cas de température trop élevée, c'est-à-dire supérieure à un seuil maximum prédéfini, les réactions de corrosion sont accélérées et il peut s'en suivre une diminution de la durée de vie de la batterie. Il existe également un risque d'emballement thermique pouvant aller jusqu'à la destruction de la batterie. Au contraire, en cas de température trop basse, c'est-à-dire inférieure à un seuil minimal prédéfini, l'autonomie de la batterie peut décroître fortement.

Il est donc important de surveiller et d'équilibrer la température de la batterie.

Afin de réguler la température de la batterie, il est connu d'utiliser un dispositif de régulation thermique.

Un tel dispositif de régulation thermique utilise un fluide caloporteur apte à absorber la chaleur émise par les cellules de la batterie afin de l'évacuer et ainsi les refroidir. Les fluides caloporteurs généralement utilisés sont un gaz, par exemple de l'air ambiant, ou des liquides, par exemple de l'eau. Un liquide est toutefois privilégié car il est un meilleur conducteur de chaleur qu'un gaz.

Par ailleurs, les véhicules sont fréquemment équipés d'une installation de chauffage, ventilation, et/ou climatisation pour réguler thermiquement l'espace intérieur d'un habitacle du véhicule en délivrant un flux d'air intérieur à température désirée.

L'installation de chauffage, ventilation, et/ou climatisation comprend généralement une boucle de climatisation à l'intérieur de laquelle circule un fluide réfrigérant.

On connaît également des installations de chauffage, ventilation, et/ou climatisation comportant en outre une boucle de régulation thermique destinée à la gestion thermique de composants électriques du véhicule.

Plus précisément, la boucle de régulation thermique est en relation avec la boucle de climatisation, de façon à permettre un échange thermique entre le fluide réfrigérant et le fluide caloporteur, par exemple destiné au refroidissement de la batterie.

En revanche, pour le chauffage de la batterie, la boucle de régulation comprend un dispositif de chauffage additionnel, utilisant par exemple des résistances électriques ou des résistances à coefficient de température positif. Les fluides caloporteurs chauffés par un tel dispositif de chauffage, peuvent, dans ce cas, apporter de la chaleur pour réchauffer la batterie. Un tel dispositif de chauffage additionnel est essentiel pour réguler la température de la batterie, notamment par des températures basses en hiver, où il faut augmenter la température de la batterie avant de commencer à la charger. Ces dispositifs de chauffage additionnel sont généralement incorporés à l'intérieur du boîtier de protection du pack batterie.

Cependant, une telle solution utilisant la boucle de climatisation pour le refroidissement mais nécessitant un dispositif de chauffage additionnel pour le chauffage de la batterie, est encombrante et est difficile à mettre en oeuvre à l'intérieur du pack batterie ou à proximité du pack batterie.

On connaît aussi une autre solution dans laquelle on utilise un circuit de fluide caloporteur pour réguler la température de la batterie avec, d'une part, un refroidisseur, pour refroidir le fluide caloporteur, et, d'autre part, un dispositif de chauffage électrique additionnel, pour chauffer le fluide caloporteur. Cette solution avec un refroidisseur et un dispositif de chauffage du fluide caloporteur est particulièrement encombrante.

Selon une autre solution, il est prévu, dans le pack batterie, des canaux de circulation du fluide réfrigérant en provenance de la boucle de climatisation, définissant un circuit froid, et des canaux comprenant, par exemple, des résistances électriques, pour définir un circuit chaud. Comme précédemment, une telle solution nécessite de prévoir deux systèmes, l'un pour le refroidissement de la batterie, et l'autre pour le chauffage de la batterie.

L'invention a donc pour objectif de pallier les inconvénients des systèmes de l'art antérieur décrits précédemment en proposant une installation de chauffage, ventilation, et/ou climatisation pour véhicule automobile simple, comportant au moins un dispositif de régulation thermique apte à permettre le refroidissement et le chauffage de la batterie.

À cet effet, l'invention a pour objet une installation de chauffage, ventilation, et/ou climatisation selon la première revendication.

Plus spécifiquement, les moyens de commutation comportent au moins une première vanne de commande, agencée à la sortie du compresseur.

Par ailleurs, le dispositif de régulation thermique peut comporter au moins un deuxième organe de détente, agencé en amont de l'échangeur de conditionnement thermique, selon le sens de circulation du fluide réfrigérant et, préférentiellement, agencée en parallèle du premier organe de détente.

Par ailleurs, l'installation de chauffage, ventilation, et/ou climatisation selon la présente invention comprend une boucle de climatisation d'un flux d'air intérieur, destiné à être distribué dans un habitacle du véhicule, comprenant au moins le compresseur et le condenseur.

Selon la présente invention, la boucle de climatisation comporte au moins un organe de détente, dit troisième organe de détente, interposé entre le condenseur et un évaporateur.

Avantageusement, le fluide caloporteur est un flux d'air de conditionnement thermique, apte à être en contact avec des cellules de la batterie après échange thermique avec le fluide réfrigérant.

Le dispositif de régulation thermique comporte, alors, un pulseur pour envoyer le flux d'air de conditionnement thermique vers l'échangeur de conditionnement thermique.

Alternativement, le fluide caloporteur est un liquide caloporteur circulant, préférentiellement, dans des canaux de circulation, aptes à être en contact avec des cellules de la batterie.

La présente invention porte également sur un procédé de régulation thermique d'une batterie d'un véhicule automobile mis en oeuvre par une installation de chauffage, ventilation, et/ou climatisation telle que décrite précédemment, comprenant une étape de sélection d'un mode de fonctionnement entre au moins un mode de fonctionnement dit "refroidissement" et un mode de fonctionnement dit "chauffage", de sorte que :
- dans le mode de fonctionnement dit "refroidissement", le fluide réfrigérant, en sortie du compresseur, traverse le condenseur, le premier organe de détente et l'échangeur de conditionnement thermique, et
- dans le mode de fonctionnement dit "chauffage", le fluide réfrigérant, en sortie du compresseur, contourne le premier organe de détente et traverse l'échangeur de conditionnement thermique.

Le procédé de régulation thermique d'une batterie selon la présente invention est mis en oeuvre par une installation de chauffage, ventilation, et/ou climatisation comprenant une première vanne de commande agencée à la sortie du compresseur et une deuxième vanne de commande agencée en amont du premier organe de détente, dans le sens de circulation du fluide réfrigérant.

Selon cette configuration, dans le mode de fonctionnement dit "refroidissement", le procédé comprend:
- une étape de commutation de la première vanne de commande, de sorte que le fluide réfrigérant circule depuis le compresseur vers le condenseur, et
- une étape de commutation la deuxième vanne de commande, de sorte que le fluide réfrigérant circule depuis le condenseur vers le premier organe de détente et à travers l'échangeur de conditionnement thermique.

Selon cette même configuration, dans le mode de fonctionnement dit "chauffage", le procédé comprend:
- une étape de commutation de la première vanne de commande, de sorte que le fluide réfrigérant circule depuis le compresseur vers la deuxième vanne de commande,
- une étape de commutation de la deuxième vanne de commande, de sorte que le fluide réfrigérant circule depuis la première vanne de commande vers l'échangeur de conditionnement thermique.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des variantes de réalisation données à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles :
- la figure 1 représente, de façon schématique, une installation de chauffage, ventilation et/ou climatisation pour véhicule automobile comprenant un dispositif de régulation thermique selon une première variante de réalisation, dans un mode de fonctionnement dit "refroidissement",
- la figure 2 représente, de façon schématique, l'installation de chauffage, ventilation et/ou climatisation de la figure 1 dans un mode de fonctionnement dit "chauffage",
- la figure 3 représente, de façon schématique, une installation de chauffage, ventilation et/ou climatisation pour véhicule automobile comprenant un dispositif de régulation thermique selon une deuxième variante de réalisation, dans un mode de fonctionnement dit "refroidissement", et
- la figure 4 représente, de façon schématique, l'installation de chauffage, ventilation et/ou climatisation de la figure 3 dans un mode de fonctionnement dit "chauffage".

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Selon la présente invention, les termes "aval", "amont", "en série" et "en parallèle" qualifient la position d'un composant par rapport à un autre, selon le sens de circulation de fluide réfrigérant dans une boucle de climatisation et/ou un dispositif de régulation thermique.

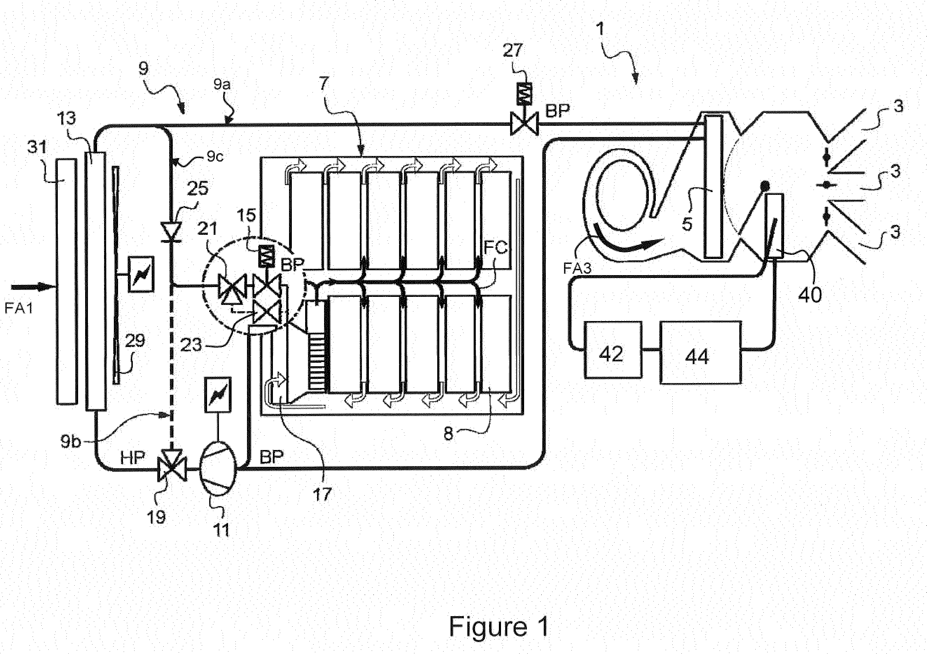

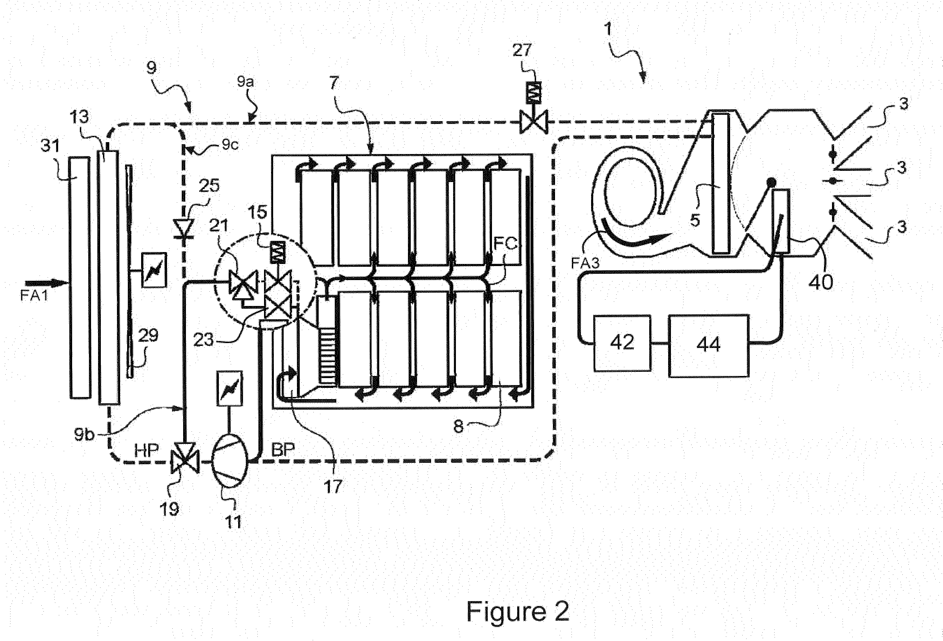

Les figures 1 et 2 représentent, de façon schématique, une installation de chauffage, ventilation, et/ou climatisation 1 pour véhicule automobile comprenant un dispositif de régulation thermique 9 selon une première variante de réalisation, respectivement, dans un mode de fonctionnement dit "refroidissement" et dans un mode de fonctionnement dit "chauffage",

Une telle installation de chauffage, ventilation, et/ou climatisation 1 comporte au moins une unité de chauffage, ventilation, et/ou climatisation permettant notamment de modifier les paramètres aérothermiques d'un habitacle du véhicule en délivrant un flux d'air intérieur FA3 à température adaptée dans l'habitacle, par exemple par l'intermédiaire d'au moins une bouche d'entrée d'air vers au moins une bouche de diffusion 3 du flux d'air intérieur FA3 dans l'habitacle. La bouche de diffusion 3 peut être, notamment, une bouche de dégivrage/désembuage, destinée à délivrer le flux d'air intérieur FA3 vers un pare-brise et/ou des vitres avant du véhicule, une bouche d'aération, destinée à délivrer le flux d'air intérieur FA3 vers les passagers du véhicule, ou une bouche de diffusion basse, destinée à délivrer le flux d'air intérieur FA3 vers les parties inférieures de l'habitacle du véhicule.

L'installation de chauffage, ventilation, et/ou climatisation 1 comporte une boucle de climatisation 9a dans laquelle circule un fluide réfrigérant, comprenant notamment un évaporateur 5. Avantageusement, l'évaporateur 5 est agencé dans l'unité de chauffage, ventilation, et/ou climatisation. L'évaporateur 5 permet de refroidir et/ou déshumidifier le flux d'air intérieur FA3 destiné à être diffusé à température adaptée dans l'habitacle.

De plus, afin de permettre la mise à température adaptée du flux d'air intérieur FA3 destiné à être diffusé dans l'habitacle, l'unité de chauffage, ventilation, et/ou climatisation loge également un radiateur de chauffage 40. Selon un exemple particulier de réalisation, le radiateur de chauffage 40 est parcouru par un fluide calorifique circulant dans un circuit de chauffage. Le circuit de chauffage comporte notamment un pompe 42 et un dispositif de chauffage 44 permettant de chauffer le fluide calorifique. Le dispositif de chauffage 44 est, par exemple, un radiateur de chauffage électrique, en particulier haute tension.

On a représenté, en outre sur la figure 1, une batterie 7, ou pack batterie 7, comportant une pluralité de cellules 8 agencées en parallèle à l'intérieur d'un boîtier formant le pack batterie 7.

De plus, l'installation de chauffage, ventilation, et/ou climatisation 1 comporte un dispositif de régulation thermique 9 de la température du pack batterie 7 relié à toute ou partie de la boucle de climatisation 9a selon la présente invention.

En référence à la figure 1, on décrit maintenant une première variante de réalisation du dispositif de régulation thermique 9.

Le dispositif de régulation thermique 9 comprend une branche de refroidissement 9c, dans laquelle circule le fluide réfrigérant pour refroidir le pack batterie 7, et une branche de contournement 9b, dans laquelle circule le fluide réfrigérant pour chauffer le pack batterie 7.

Le dispositif de régulation thermique 9 comporte en série:
- un compresseur 11, pour assurer une compression et une mise en circulation du fluide réfrigérant,
- un condenseur 13, pour assurer un échange thermique entre le fluide réfrigérant et un premier flux d'air FA1, tel qu'un flux d'air extérieur FA1, avantageusement mis en mouvement par la dynamique du véhicule et/ou par un groupe moto-ventilateur 29,
- au moins un premier organe de détente 15, et
- un échangeur de conditionnement thermique 17, pour assurer un échange thermique entre le fluide réfrigérant et un fluide caloporteur FC, notamment un deuxième flux d'air FA2, tel qu'un flux d'air de conditionnement thermique FA2.

Selon la présente invention, un compresseur 11 et le condenseur 13 font également partie de la boucle de climatisation 9a.

Le fluide caloporteur FC, notamment le flux d'air de conditionnement thermique FA2, est mis en circulation, par exemple sous l'action d'un organe de propulsion (non représenté), notamment un groupe moto-ventilateur, ou pulseur, ou une pompe selon le type de fluide caloporteur FC utilisé, en boucle fermée dans le pack batterie 7.

La branche de refroidissement 9c est agencée de sorte que le fluide réfrigérant en sortie du condenseur 13 circule vers le premier organe de détente 15 et l'échangeur de conditionnement thermique 17.

La branche de contournement 9b est agencée de sorte que le fluide réfrigérant en sortie du compresseur 11 circule directement vers l'échangeur de conditionnement thermique 17, en contournant le condenseur 13 et le premier organe de détente 15.

La branche de contournement 9b forme une dérivation permettant de dévier le fluide réfrigérant vers l'échangeur de conditionnement thermique 17, sans passer par le condenseur 13. Préférentiellement, dans la branche de contournement 9b, le fluide réfrigérant FR ne subit pas de détente.

La branche de contournement 9b est représentée en pointillés sur la figure 1 et en traits pleins sur la figure 2. Inversement, la branche de refroidissement 9c est représentée en traits pleins sur la figure 1 et en pointillés sur la figure 2.

Par convention, les pointillés sont utilisés afin de définir une partie de la boucle de climatisation 9a et/ou du dispositif de régulation thermique 9 dans laquelle ne circule pas le fluide réfrigérant et les traits pleins sont utilisés afin de définir une partie de la boucle de climatisation 9a et/ou du dispositif de régulation thermique 9 dans laquelle circule le fluide réfrigérant.

En fonctionnement, le compresseur 11 aspire le fluide réfrigérant à l'état gazeux à basse pression et à basse température, tel qu'illustré schématiquement par le sigle "BP" sur les figures.

Le fluide réfrigérant provient, par exemple, de l'évaporateur 5 de la boucle de climatisation 9a et/ou de l'échangeur de conditionnement thermique 17 du dispositif de régulation thermique 9.

La compression permet d'élever la pression et la température du fluide réfrigérant, tel qu'illustré schématiquement par le sigle "HP" sur les figures.

Le condenseur 13 est, par exemple, agencé à l'intérieur du véhicule au niveau de la face avant pour être traversé par le flux d'air extérieur FA1, en provenance de l'extérieur du véhicule.

Le condenseur 13 est apte à recevoir le fluide réfrigérant à l'état gazeux et chaud. En se condensant, le fluide réfrigérant, à l'état gazeux cède de la chaleur au flux d'air extérieur FA1.

Le premier organe de détente 15 permet d'abaisser la pression et la température du fluide réfrigérant avant de pénétrer dans l'échangeur de conditionnement thermique 17, dans lequel le fluide réfrigérant subit une évaporation, dans le mode de fonctionnement dit "refroidissement" du pack batterie 7.

Dans de telles conditions, l'échangeur de conditionnement thermique 17 est apte à refroidir le fluide caloporteur FC, circulant dans le pack batterie 7, lorsque le fluide réfrigérant circule dans la branche de refroidissement 9c ou à chauffer le fluide caloporteur FC, circulant dans le pack batterie 7, lorsque le fluide réfrigérant circule dans la branche de contournement 9b.

Le mode de fonctionnement dit "refroidissement" pour refroidir le pack batterie 7, présenté en figure 1, et le mode de fonctionnement dit "chauffage" pour chauffer le pack batterie 7, présenté en figure 2, vont être décrits plus en détail ci-après.

Dans le mode de fonctionnement dit "refroidissement" du pack batterie 7, le fluide réfrigérant entrant dans l'échangeur de conditionnement thermique 17 absorbe la chaleur du fluide caloporteur FC en s'évaporant ce qui a pour effet de refroidir le fluide caloporteur FC.

Dans le mode de fonctionnement dit "chauffage" du pack batterie 7, le fluide réfrigérant entrant dans l'échangeur thermique de conditionnement cède de la chaleur au fluide caloporteur FC ce qui a pour effet de chauffer le fluide caloporteur FC.

Selon la présente invention, le même échangeur de conditionnement thermique 17 peut être utilisé à la fois en mode de fonctionnement dit "refroidissement" du pack batterie 7 et en mode de fonctionnement dit "chauffage" du pack batterie 7, sans nécessiter de dispositif de chauffage supplémentaire.

L'échangeur de conditionnement thermique 17 est en outre agencé avec une sortie reliée à l'entrée du compresseur 11. Ainsi, le fluide réfrigérant, à basse pression et basse température, en sortie de l'échangeur de conditionnement thermique 17, retourne dans le compresseur 11 afin de recommencer un cycle.

Le dispositif de régulation thermique 9 comprend en outre des moyens de commutation afin de permettre le passage entre le mode de fonctionnement dit "refroidissement", décrit à la figure 1, et le mode de fonctionnement dit "chauffage", décrit à la figure 2.

Selon le mode de réalisation illustré, les moyens de commutation comprennent au moins une première vanne de commande 19, par exemple une première vanne trois-voies 19, agencée à la sortie du compresseur 11. Avantageusement, la première vanne de commande 19 est commandée par un moyen de commande (non représenté).

La première vanne de commande 19 comprend des passages permettant, selon la configuration définie, de faire circuler le fluide réfrigérant depuis le compresseur 11 :
- vers le condenseur 13, comme cela est représenté en traits pleins sur la figure 1, et/ou
- vers l'échangeur de conditionnement thermique 17 en passant dans la branche de contournement 9b, comme cela est représenté en traits pleins sur la figure 2.

Bien entendu, on peut envisager d'autres moyens permettant de définir un premier trajet du fluide réfrigérant du compresseur 11 vers le condenseur 13, et un deuxième trajet du fluide réfrigérant, dit trajet de contournement, du compresseur 11 vers l'échangeur de conditionnement thermique 17.

Selon le mode de réalisation illustré, les moyens de commutation comportent aussi une deuxième vanne de commande 21, par exemple une deuxième vanne trois-voies 21, agencée en amont du premier organe de détente 15, dans le sens de circulation du fluide réfrigérant. Plus précisément, selon le mode de réalisation illustré, la deuxième vanne de commande 21 est agencée entre la première vanne de commande 19 et le premier organe de détente 15.

La deuxième vanne de commande 21 comprend comprend des passages permettant, selon la configuration définie, de faire circuler le fluide réfrigérant :
- depuis le condenseur 13, via la branche de refroidissement 9c, vers le premier organe de détente 15, et/ou
- depuis la première vanne de commande 19, via la branche de contournement 9b, vers l'échangeur de conditionnement thermique 17, sans passer par le condenseur 13 et le premier organe de détente 15.

À cet effet, le dispositif de régulation thermique 9 comporte selon le mode de réalisation illustré, un deuxième organe de détente 23 agencée en parallèle du premier organe de détente 15.

Préférentiellement, la section de passage du deuxième organe de détente 23 est nettement plus grande que la section de passage du premier organe de détente 5.

En dépit de la détente opérée par le deuxième organe de détente 23, le fluide réfrigérant demeure à une température élevée permettant au fluide réfrigérant de céder de la chaleur au fluide caloporteur FC.

Selon l'exemple de réalisation présenté aux figures 1 et 2, le deuxième organe de détente 23 permet donc de relier la deuxième vanne de commande 21 à l'entrée de l'échangeur de conditionnement thermique 17 en contournant le premier organe de détente 15.

Pour faciliter la lecture des dessins, la zone comportant la deuxième vanne de commande 21, le premier organe de détente 15, et le deuxième organe de détente 23, est agrandie de façon schématique, comme l'illustre le cercle en pointillés.

A titre d'exemple, le premier organe de détente 15 est un détendeur thermostatique comprenant, ou couplé, à une vanne de contrôle, permettant d'autoriser et/ou d'interdire la circulation de fluide réfrigérant, et le deuxième organe de détente 23 est un détendeur ou un orifice-tube. Alternativement, le deuxième organe de détente 23 peut comprendre ou être couplé à une vanne de contrôle, permettant d'autoriser et/ou d'interdire la circulation de fluide réfrigérant.

Selon une variante de réalisation, le premier organe de détente 15, la deuxième vanne de commande 21 et le deuxième organe de détente 23 peuvent être combinés en un seul et unique premier organe de détente 15.

Avantageusement, un tel unique premier organe de détente 15 est un détendeur électronique étanche, apte à fonctionner en tant qu'une vanne d'isolement et dont la section de passage maximale est suffisante, pour pouvoir assurer à la fois le mode de fonctionnement dit "chauffage" et le mode de fonctionnement dit "refroidissement".

Dans le mode de fonctionnement dit "chauffage", le fluide réfrigérant subit un cycle thermodynamique dit "gaz chauds" dans lequel le fluide réfrigérant est, successivement, comprimé par le compresseur 11 puis détendu par le deuxième organe de détente 23, respectivement l'unique premier organe de détente 15, sans changement de phase, avant de retourner au compresseur 11.

Dans le mode de fonctionnement dit "chauffage", le deuxième organe de détente 23, respectivement l'unique premier organe de détente 15, fait subir au fluide réfrigérant une chute de pression se traduisant par une baisse de température.

Le deuxième organe de détente 23, respectivement l'unique premier organe de détente 15, est alimenté en gaz surchauffé, venant du compresseur 11, dont la densité est très inférieure à celle du liquide. La section de passage nécessaire est alors beaucoup plus grande que dans le mode de fonctionnement dit "refroidissement".

Dans le mode de fonctionnement dit "refroidissement", le premier organe de détente 15, respectivement l'unique premier organe de détente 15, est alimenté en fluide réfrigérant, dans un état liquide, venant du condenseur 13.

En outre, on peut prévoir, sur la branche de refroidissement 9c, un clapet anti-retour 25, agencé entre le condenseur 13 et la deuxième vanne de commande 21. Ainsi, le clapet anti-retour 25 autorise une circulation du fluide réfrigérant uniquement depuis le condenseur 13 vers la deuxième vanne de commande 21.

Bien entendu, on peut prévoir tout autre moyen de blocage empêchant au fluide réfrigérant en sortie de la première vanne de commande 19 de circuler dans la branche de refroidissement 9c vers le condenseur 13.

De plus, on peut prévoir un troisième organe de détente 27 agencé entre le condenseur 13 et l'évaporateur 5 de la boucle de climatisation 9a. Ainsi, le fluide réfrigérant en sortie du condenseur 13 peut subir une détente, de manière à abaisser la pression et la température, avant d'entrer dans l'évaporateur 5 afin d'y être évaporé.

Sur les figures, un échangeur de chaleur additionnel 31 est présent à face avant du véhicule. Un tel échangeur de chaleur additionnel 31 est susceptible d'assurer le refroidissement de composants installés dans le véhicule, tel qu'un moteur thermique, dans le cadre d'un véhicule hybride, ou une chaîne de traction, dans le cadre d'un véhicule hybride ou électrique.

On décrit maintenant les différents modes de fonctionnement du dispositif de régulation thermique 9, précédemment décrit de façon schématique sur les figures 1 et 2 selon la première variante de réalisation.

Sur les figures 1 et 2, la circulation du fluide réfrigérant est illustrée de façon schématique en traits pleins. En revanche, les parties de la boucle de climatisation 9a et/ou du dispositif de régulation thermique 9 inopérantes, c'est-à-dire à l'intérieur desquelles le fluide réfrigérant ne circule pas, sont représentées en traits pointillés.

Le procédé de mise en oeuvre du dispositif de régulation thermique 9 comprend une étape de sélection d'un mode de fonctionnement entre un mode de fonctionnement dit "refroidissement" ou un mode de fonctionnement dit "chauffage" du pack batterie 7.

Selon le mode de fonctionnement choisi, la première vanne de commande 19 et la deuxième vanne de commande 21 sont commandées en conséquence pour laisser le fluide réfrigérant circuler dans la branche de refroidissement 9c et/ou dans la branche de contournement 9b.

La figure 1 représente le dispositif de régulation thermique 9 mis en oeuvre dans le mode de fonctionnement dit "refroidissement", pour refroidir le pack batterie 7.

Dans le mode de fonctionnement dit "refroidissement", le fluide réfrigérant en sortie du compresseur 11 est condensé dans le condenseur 13, puis est acheminé, via la branche de refroidissement 9c, vers le premier organe de détente 15, dans lequel il subit une détente, avant de passer dans l'échangeur de conditionnement thermique 17, traversé par le fluide caloporteur FC, notamment le flux d'air de conditionnement thermique FA2, ainsi refroidi.

Pour ce faire, le procédé comprend :
- une étape de commutation de la première vanne de commande 19, de sorte que le fluide réfrigérant circule depuis le compresseur 11 vers le condenseur 13,
- une étape de commutation de la deuxième vanne de commande 21, de sorte que le fluide réfrigérant circule depuis le condenseur 13 vers l'échangeur de conditionnement thermique 17 en passant par le premier organe de détente 15, et
- une étape d'évaporation du fluide réfrigérant dans l'échangeur de conditionnement thermique 17.

Ainsi, en passant dans le condenseur 13, le fluide réfrigérant à l'état gazeux comprimé à haute pression et haute température, cède de la chaleur au flux d'air extérieur FA1.

Une partie du fluide réfrigérant en sortie du condenseur 13 circule, par la branche de refroidissement 9c, vers l'échangeur de conditionnement thermique 17 en passant par le premier organe de détente 15. Au passage du fluide réfrigérant dans le premier organe de détente 15, la pression et la température du fluide réfrigérant sont abaissées. Ainsi, lors du passage dans l'échangeur de conditionnement thermique 17, fonctionnant en tant qu'évaporateur, le fluide réfrigérant, en s'évaporant, absorbe la chaleur du fluide caloporteur FC.

Le fluide caloporteur FC refroidi circule alors dans le pack batterie 7, autour des cellules 8 pour les refroidir.

Le fluide réfrigérant en sortie de l'échangeur de conditionnement thermique 17 retourne ensuite dans le compresseur 11 pour recommencer un cycle.

Par ailleurs, une autre partie du fluide réfrigérant en sortie du condenseur 13 peut circuler, en série, dans le troisième organe de détente 27, afin d'assurer une détente du fluide réfrigérant, puis dans l'évaporateur 5, afin de refroidir le flux d'air intérieur FA3, destiné à être diffusé dans l'habitacle du véhicule, et retourner au compresseur 11, afin recommencer un cycle.

En référence à la figure 2, on décrit maintenant le dispositif de régulation thermique 9 mis en oeuvre dans le mode de fonctionnement dit " chauffage ", pour réchauffer le pack batterie 7.

Dans le mode de fonctionnement dit "chauffage", le fluide réfrigérant en sortie du compresseur 11 échange de la chaleur avec le fluide caloporteur FC dans l'échangeur de conditionnement thermique 17.

Pour ce faire, le procédé comprend:
- une étape de commutation de la première vanne de commande 19, de sorte que le fluide réfrigérant circule depuis le compresseur 11 vers la deuxième vanne de commande 21, et
- une étape de commutation de la deuxième vanne de commande 21, de sorte que le fluide réfrigérant circule depuis la première vanne de commande 19 vers l'échangeur de conditionnement thermique 17.

L'échangeur de conditionnement thermique 17 reçoit, en entrée, le fluide réfrigérant à l'état gazeux et chaud. En passant dans l'échangeur de conditionnement thermique 17, le fluide réfrigérant, à l'état gazeux comprimé à haute pression et haute température, cède de la chaleur au fluide caloporteur FC.

Le fluide caloporteur FC chauffé circule alors dans le pack batterie 7, autour des cellules 8 pour les chauffer.

Le fluide réfrigérant en sortie de l'échangeur de conditionnement thermique 17 retourne ensuite au compresseur 11 pour recommencer un cycle.

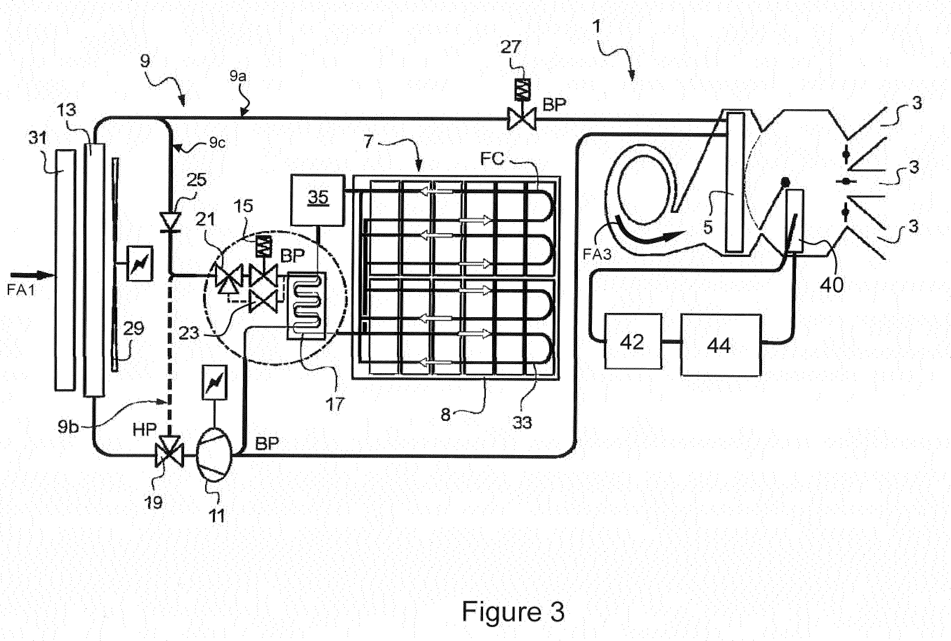

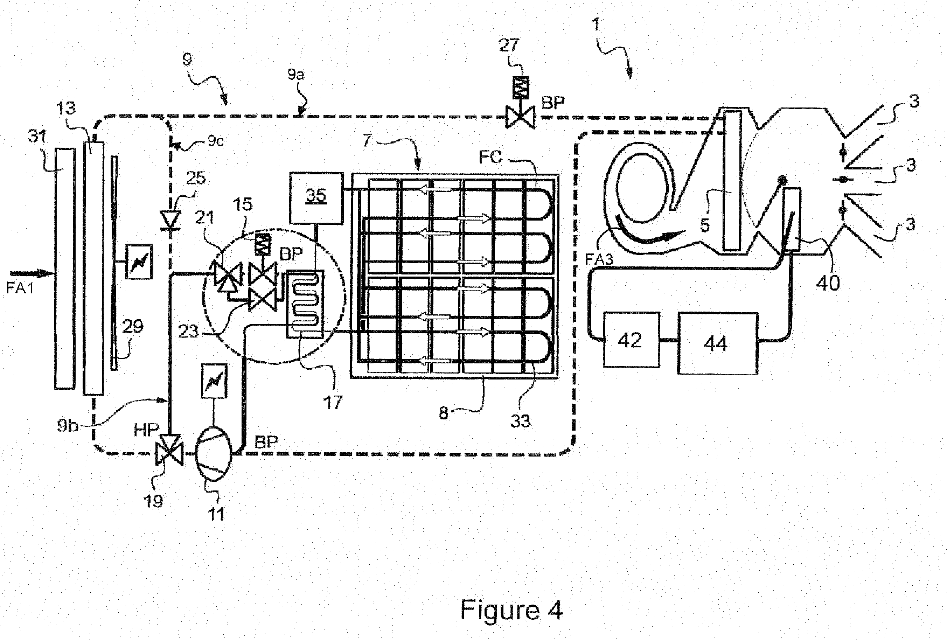

Les figures 3 et 4 représentent, de façon schématique, une installation de chauffage, ventilation, et/ou climatisation 1 pour véhicule automobile comprenant un dispositif de régulation thermique 9 selon une deuxième variante de réalisation, respectivement, dans un mode de fonctionnement dit "refroidissement et dans un mode de fonctionnement dit "chauffage".

La deuxième variante de réalisation diffère de la première variante de réalisation présentée aux figures 1 et 2, par le fait que l'échangeur de conditionnement thermique 17 n'est plus un échangeur de chaleur entre un flux d'air de conditionnement thermique et le fluide réfrigérant. Selon la deuxième variante de réalisation, l'échangeur de conditionnement thermique 17 est un échangeur de chaleur entre le fluide réfrigérant et un liquide caloporteur, tel que notamment de l'eau glycolée. La deuxième variante de réalisation est qualifiée d'indirect contrairement à la première variante de réalisation présentée aux figures 1 et 2.

Selon la deuxième variante de réalisation, le pack batterie 7 comporte des canaux de circulation 33 du fluide caloporteur FC, agencés en contact direct avec les cellules 8 du pack batterie 7, pour assurer la régulation thermique du pack batterie 7 à l'aide du fluide caloporteur FC, notamment un liquide caloporteur LC.

De façon similaire à la première variante de réalisation, dans le mode de fonctionnement dit "refroidissement" du pack batterie 7, le fluide réfrigérant entrant dans l'échangeur de conditionnement thermique 17 absorbe la chaleur du fluide caloporteur FC, notamment du liquide caloporteur LC, ce qui a pour effet de refroidir le fluide caloporteur FC.

Dans le mode de fonctionnement dit "chauffage" du pack batterie 7, l'échangeur de conditionnement thermique 17 reçoit le fluide réfrigérant à l'état gazeux et chaud et cède de la chaleur au fluide caloporteur FC, ce qui a pour effet de chauffer le fluide caloporteur FC.

Le même échangeur de conditionnement thermique 17 peut être utilisé à la fois dans le mode de fonctionnement dit "refroidissement" du pack batterie 7 et en mode de fonctionnement dit "chauffage" du pack batterie 7, sans nécessiter de dispositif de chauffage supplémentaire.

En outre, selon la deuxième variante de réalisation, on prévoit, par exemple, un moyen de mise en circulation 35, par exemple une pompe 35, du fluide caloporteur FC. Préférentiellement, le moyen de mise en circulation 35 est agencé entre le pack batterie 7 et l'échangeur de conditionnement thermique 17.

On décrit maintenant les différents modes de fonctionnement du dispositif de régulation thermique 9 selon la deuxième variante de réalisation.

Sur les figures 3 et 4, la circulation du fluide réfrigérant est illustrée de façon schématique en traits pleins. En revanche, les parties de la boucle de climatisation 9a et/ou du dispositif de régulation thermique 9 inopérantes, c'est-à-dire à l'intérieur desquelles le fluide réfrigérant ne circule pas, sont représentées en traits pointillés.

De façon similaire à la première variante de réalisation, le procédé de mise en oeuvre du dispositif de régulation thermique 9 comprend une étape de sélection entre un mode de fonctionnement dit "refroidissement" ou un mode de fonctionnement dit "chauffage" du pack batterie 7.

Selon le mode de fonctionnement choisi, la première vanne de commande 19 et la deuxième vanne de commande 21 sont commandées en conséquence pour laisser le fluide réfrigérant circuler dans la branche de refroidissement 9a et/ou dans la branche de contournement 9b.

La figure 3 représente le dispositif de régulation thermique 9 mis en oeuvre dans le mode de fonctionnement dit "refroidissement"pour refroidir le pack batterie 7.

Dans ce mode de fonctionnement dit "refroidissement", le fluide réfrigérant en sortie du compresseur 11 est condensé dans le condenseur 13, puis est acheminé, via la branche de refroidissement 9c, vers le premier organe de détente 15, dans lequel il subit une détente, avant de passer dans l'échangeur de conditionnement thermique 17, traversé par le fluide caloporteur FC, notamment le liquide caloporteur LC, ainsi refroidi.

Pour ce faire, le procédé comprend:
- une étape de commutation de la première vanne de commande 19, de sorte que le fluide réfrigérant circule depuis le compresseur 11 vers le condenseur 13,
- une étape de commutation de la deuxième vanne de commande 21, de sorte que le fluide réfrigérant circule depuis le condenseur 13 vers l'échangeur de conditionnement thermique 17 en passant par le premier organe de détente 15, et
- une étape d'évaporation du fluide réfrigérant dans l'échangeur de conditionnement thermique 17.

Ainsi, en passant dans le condenseur 13, le fluide réfrigérant à l'état gazeux comprimé à haute pression et haute température, cède de la chaleur au flux d'air extérieur FA1.

Une partie du fluide réfrigérant en sortie du condenseur 13 circule vers l'échangeur de conditionnement thermique 17 en passant par le premier organe de détente 15. Au passage du fluide réfrigérant dans le premier organe de détente 15, la pression et la température du fluide réfrigérant sont abaissées.

L'échangeur de conditionnement thermique 17 reçoit en entrée, d'une part, le fluide réfrigérant à basse pression et, d'autre part, le fluide caloporteur FC.

Lors du passage dans l'échangeur de conditionnement thermique 17, le fluide réfrigérant absorbe la chaleur du fluide caloporteur FC traversant l'échangeur de conditionnement thermique 17, le fluide caloporteur FC étant ainsi refroidi.

Le procédé peut comprendre une étape de mise en opération du moyen de mise en circulation 35 du fluide caloporteur FC, de sorte que le fluide caloporteur FC circule dans les canaux de circulation 33 avant de retourner dans l'échangeur de conditionnement thermique 17.

La circulation du fluide caloporteur FC est représentée de façon schématique par les flèches sur la figure 3.

Le fluide caloporteur FC, notamment le liquide caloporteur LC, refroidi circulant dans les canaux de circulation 33 permet donc de refroidir les cellules 8 du pack batterie 7.

Le fluide réfrigérant en sortie de l'échangeur de conditionnement thermique 17 retourne ensuite dans le compresseur 11 pour recommencer un cycle.

Par ailleurs, une autre partie du fluide réfrigérant en sortie du condenseur 13 peut circuler en série dans le troisième organe de détente 27, afin d'assurer une détente du fluide réfrigérant, puis dans l'évaporateur 5 et retourner au compresseur 11, afin de recommencer un cycle.

En référence à la figure 4, on décrit maintenant les étapes du procédé dans le mode de fonctionnement dit "chauffage" de la batterie 7.

Dans le mode de fonctionnement dit "chauffage", le fluide réfrigérant en sortie du compresseur 11 échange de la chaleur avec le fluide caloporteur FC, notamment le liquide caloporteur LC, dans l'échangeur de conditionnement thermique 17.

Pour ce faire, le procédé comprend:
- une étape de commutation de la première vanne de commande 19, de sorte que le fluide réfrigérant circule depuis le compresseur 11 vers la deuxième vanne de commande 21, et
- une étape de commutation de la deuxième vanne de commande 21, de sorte que le fluide réfrigérant circule depuis la première vanne de commande 19 vers l'échangeur de conditionnement thermique 17.

L'échangeur de conditionnement thermique 17 reçoit donc en entrée, d'une part, le fluide réfrigérant à l'état gazeux et chaud et, d'autre part, le fluide caloporteur FC, notamment le liquide caloporteur LC.

En passant dans l'échangeur de conditionnement thermique 17, le fluide réfrigérant à l'état gazeux comprimé à haute pression et haute température, cède de la chaleur au fluide caloporteur FC.

Le procédé peut comprendre une étape de mise en opération du moyen de mise en circulation 35 du fluide caloporteur FC, de sorte que le fluide caloporteur FC circule dans les canaux de circulation 33 avant de retourner dans l'échangeur de conditionnement thermique 17.

Le fluide caloporteur FC chauffé circulant dans les canaux de circulation 33 permet donc de réchauffer les cellules 8 du pack batterie 7.

Le fluide réfrigérant en sortie de l'échangeur de conditionnement thermique 17 retourne ensuite dans le compresseur 11 pour recommencer un cycle.

On comprend donc que l'agencement de l'échangeur de conditionnement thermique 17 et la commande des moyens de commutation permet de changer facilement de modes de fonctionnement, entre le mode de fonctionnement dit "refroidissement" et le mode de fonctionnement dit "chauffage" du pack batterie 7, en utilisant moins de composants que dans les agencements connus, puisque le même échangeur de conditionnement thermique 17 est utilisé pour le mode de fonctionnement dit "refroidissement" et le mode de fonctionnement dit "chauffage", à l'aide d'une dérivation permettant de contourner au moins le condenseur 13, et optionnellement le premier organe de détente 15, dans le mode de fonctionnement dit "chauffage".

Bien évidemment, l'invention n'est pas limitée aux modes de réalisation décrits précédemment et fournis uniquement à titre d'exemple.

## Revendications

1. Installation de chauffage, ventilation, et/ou climatisation (1) comportant un pack batterie (7) et un dispositif de régulation thermique (9) d'une batterie (7) d'un véhicule automobile comprenant au moins un compresseur (11), un condenseur (13), un premier organe de détente (15), un échangeur de conditionnement thermique (17) pour un échange thermique entre un fluide réfrigérant et un fluide caloporteur (FC), et des moyens de commutation,
le dispositif de régulation thermique (9) comprenant au moins une branche de contournement (9b) reliant une sortie du compresseur (11) à une entrée de l'échangeur de conditionnement thermique (17) en contournant le condenseur (13), les moyens de commutation comportant au moins une deuxième vanne de commande (21), agencée en amont du premier organe de détente (15), dans le sens de circulation du fluide réfrigérant et le dispositif de régulation thermique (9) comprenant une branche de refroidissement (9c) agencée entre le condenseur (13) et la deuxième vanne de commande (21), cette branche de refroidissement (9c) étant agencée de sorte que lorsque le fluide réfrigérant la parcourt, le fluide réfrigérant en sortie du condenseur (13) circulant vers le premier organe de détente (15) et l'échangeur de conditionnement thermique (17),
**caractérisé en ce que** le fluide caloporteur (FC) est mis en circulation en boucle fermée dans le pack batterie (7).

2. Installation de chauffage, ventilation, et/ou climatisation (1) selon la revendication 1, **caractérisée en ce que** les moyens de commutation comportent au moins une première vanne de commande (19), agencée à la sortie du compresseur (11).

3. Installation de chauffage, ventilation, et/ou climatisation (1) selon l'une quelconque des revendications précédentes, **caractérisée en ce que** la branche de refroidissement (9c) comporte un clapet anti-retour (25), agencé entre le condenseur (13) et la deuxième vanne de commande (21).

4. Installation de chauffage, ventilation, et/ou climatisation (1) selon l'une quelconque des revendications précédentes, **caractérisée en ce que** le dispositif de régulation thermique (9) comporte au moins un deuxième organe de détente (23), agencé en amont de l'échangeur de conditionnement thermique (17), selon le sens de circulation du fluide réfrigérant.

5. Installation de chauffage, ventilation, et/ou climatisation (1) selon la revendication 4, **caractérisée en ce que** le deuxième organe de détente (23) est agencé en parallèle du premier organe de détente (15).

6. Installation de chauffage, ventilation, et/ou climatisation (1) selon l'une quelconque des revendications précédentes, **caractérisée en ce qu'**elle comprend une boucle de climatisation (9a) d'un flux d'air intérieur (FA3), destiné à être distribué dans un habitacle du véhicule, comprenant au moins le compresseur (11) et le condenseur (13).

7. Installation de chauffage, ventilation, et/ou climatisation (1) selon la revendication 6, **caractérisée en ce que** la boucle de climatisation (9c) comporte au moins un organe de détente (27) interposé entre le condenseur (13) et un évaporateur (5).

8. Installation de chauffage, ventilation, et/ou climatisation (1) selon l'une quelconque des revendications précédentes, **caractérisée en ce que** le fluide caloporteur (FC) est un flux d'air de conditionnement thermique (FA2).

9. Installation de chauffage, ventilation, et/ou climatisation (1) selon la revendication 8, **caractérisée en ce que** le dispositif de régulation thermique (9) comporte un pulseur pour envoyer le flux d'air de conditionnement thermique (FA2) vers l'échangeur de conditionnement thermique (17).

10. Installation de chauffage, ventilation, et/ou climatisation (1) selon l'une quelconque des revendications 1 à 7, **caractérisée en ce que** le fluide caloporteur (FC) est un liquide caloporteur (LC).

11. Installation de chauffage, ventilation, et/ou climatisation (1) selon la revendication 10, **caractérisée en ce que** le liquide caloporteur (LC) circule dans des canaux de circulation (33), aptes à être en contact avec des cellules (8) de la batterie (7).

12. Procédé de régulation thermique d'une batterie (7) d'un véhicule automobile mis en oeuvre par une installation de chauffage, ventilation, et/ou climatisation (1) selon l'une quelconque des revendications précédentes, **caractérisé en ce qu'**il comprend une étape de sélection d'un mode de fonctionnement entre au moins un mode de fonctionnement dit "refroidissement" et un mode de fonctionnement dit "chauffage", de sorte que :
- dans le mode de fonctionnement dit "refroidissement", le fluide réfrigérant, en sortie du compresseur (11), traverse le condenseur (13), le premier organe de détente (15) et l'échangeur de conditionnement thermique (17), et
- dans le mode de fonctionnement dit "chauffage", le fluide réfrigérant, en sortie du compresseur (11), contourne le premier organe de détente (15) et traverse l'échangeur de conditionnement thermique (17).

13. Procédé de régulation thermique d'une batterie (7) selon la revendication 12, mis en oeuvre par une installation de chauffage, ventilation, et/ou climatisation (1) comprenant une première vanne de commande (19) agencée à la sortie du compresseur (11) et une deuxième vanne de commande (21) agencée en amont du premier organe de détente (15), dans le sens de circulation du fluide réfrigérant,
**caractérisé en ce que**, dans le mode de fonctionnement dit "refroidissement", le procédé comprend:
- une étape de commutation de la première vanne de commande (19), de sorte que le fluide réfrigérant circule depuis le compresseur (11) vers le condenseur (13), et
- une étape de commutation la deuxième vanne de commande (21), de sorte que le fluide réfrigérant circule depuis le condenseur (13) vers le premier organe de détente (15) et à travers l'échangeur de conditionnement thermique (17).

14. Procédé de régulation thermique d'une batterie (7) selon la revendication 12 ou 13, mis en oeuvre par une installation de chauffage, ventilation, et/ou climatisation (1) comprenant une première vanne de commande (19) agencée à la sortie du compresseur (11) et une deuxième vanne de commande (21) agencée en amont du premier organe de détente (15) dans le sens de circulation du fluide réfrigérant,
**caractérisé en ce que**, dans le mode de fonctionnement dit "chauffage", le procédé comprend:
- une étape de commutation de la première vanne de commande (19), de sorte que le fluide réfrigérant circule depuis le compresseur (11) vers la deuxième vanne de commande (21),
- une étape de commutation de la deuxième vanne de commande (21), de sorte que le fluide réfrigérant circule depuis la première vanne de commande (19) vers l'échangeur de conditionnement thermique (17).

## Patentansprüche

1. Heizungs-, Lüftungs- und/oder Klimaanlage (1), die ein Batteriepack (7) und eine thermische Regelungsvorrichtung (9) einer Batterie (7) eines Kraftfahrzeugs aufweist, die mindestens einen Kompressor (11), einen Verflüssiger (13), ein erstes Expansionsorgan (15), einen Austauscher zur thermischen Konditionierung (17) für einen Wärmeaustausch zwischen einem Kühlfluid und einem Wärmeträgerfluid (FC) und Schalteinrichtungen enthält,
wobei die thermische Regelungsvorrichtung (9) mindestens einen Umgehungszweig (9b) enthält, der einen Ausgang des Kompressors (11) mit einem Eingang des Austauschers zur thermischen Konditionierung (17) verbindet, indem er den Verflüssiger (13) umgeht, wobei die Schalteinrichtungen mindestens ein zweites Steuerventil (21) aufweisen, das stromaufwärts vor dem ersten Expansionsorgan (15) in der Strömungsrichtung des Kühlfluids angeordnet ist, und die thermische Regelungsvorrichtung (9) einen Kühlzweig (9c) enthält, der zwischen dem Verflüssiger (13) und dem zweiten Steuerventil (21) angeordnet ist, wobei dieser Kühlzweig (9c) so angeordnet ist, dass, wenn das Kühlfluid ihn durchströmt, das Kühlfluid am Ausgang des Verflüssigers (13) zum ersten Expansionsorgan (15) und zum Austauscher zur thermischen Konditionierung (17) strömt,
**dadurch gekennzeichnet, dass** das Wärmeträgerfluid (FC) im Batteriepack (7) in geschlossenem Kreislauf umgewälzt wird.

2. Heizungs-, Lüftungs- und/oder Klimaanlage (1) nach Anspruch 1, **dadurch gekennzeichnet, dass** die Schalteinrichtungen mindestens ein erstes Steuerventil (19) aufweisen, das am Ausgang des Kompressors (11) angeordnet ist.

3. Heizungs-, Lüftungs- und/oder Klimaanlage (1) nach einem der vorhergehenden Ansprüche, **dadurch gekennzeichnet, dass** der Kühlzweig (9c) ein Rückschlagventil (25) aufweist, das zwischen dem Verflüssiger (13) und dem zweiten Steuerventil (21) angeordnet ist.

4. Heizungs-, Lüftungs- und/oder Klimaanlage (1) nach einem der vorhergehenden Ansprüche, **dadurch gekennzeichnet, dass** die thermische Regelungsvorrichtung (9) mindestens ein zweites Expansionsorgan (23) aufweist, das stromaufwärts vor dem Austauscher zur thermischen Konditionierung (17) in Strömungsrichtung des Kühlfluids angeordnet ist.

5. Heizungs-, Lüftungs- und/oder Klimaanlage (1) nach Anspruch 4, **dadurch gekennzeichnet, dass** das zweite Expansionsorgan (23) parallel zum ersten Expansionsorgan (15) angeordnet ist.

6. Heizungs-, Lüftungs- und/oder Klimaanlage (1) nach einem der vorhergehenden Ansprüche, **dadurch gekennzeichnet, dass** sie einen Klimatisierungskreislauf (9a) eines inneren Luftstroms (FA3) enthält, der dazu bestimmt ist, in einem Innenraum des Fahrzeugs verteilt zu werden, der mindestens den Kompressor (11) und den Verflüssiger (13) enthält.

7. Heizungs-, Lüftungs- und/oder Klimaanlage (1) nach Anspruch 6, **dadurch gekennzeichnet, dass** der Klimatisierungskreislauf (9c) mindestens ein Expansionsorgan (27) aufweist, das zwischen den Verflüssiger (13) und einen Verdampfer (5) eingefügt ist.

8. Heizungs-, Lüftungs- und/oder Klimaanlage (1) nach einem der vorhergehenden Ansprüche, **dadurch gekennzeichnet, dass** das Wärmeträgerfluid (FC) ein Luftstrom zur thermischen Konditionierung ist (FA2) .

9. Heizungs-, Lüftungs- und/oder Klimaanlage (1) nach Anspruch 8, **dadurch gekennzeichnet, dass** die thermische Regelungsvorrichtung (9) ein Gebläse aufweist, um den Luftstrom zur thermischen Konditionierung (FA2) zum Austauscher zur thermischen Konditionierung (17) zu schicken.

10. Heizungs-, Lüftungs- und/oder Klimaanlage (1) nach einem der Ansprüche 1 bis 7, **dadurch gekennzeichnet, dass** das Wärmeträgerfluid (FC) eine Wärmeträgerflüssigkeit (LC) ist.

11. Heizungs-, Lüftungs- und/oder Klimaanlage (1) nach Anspruch 10, **dadurch gekennzeichnet, dass** die Wärmeträgerflüssigkeit (LC) in Strömungskanälen (33) strömt, die mit Zellen (8) der Batterie (7) in Kontakt sein können.

12. Verfahren zur thermischen Regelung einer Batterie (7) eines Kraftfahrzeugs, durchgeführt von einer Heizungs-, Lüftungs- und/oder Klimaanlage (1) nach einem der vorhergehenden Ansprüche, **dadurch gekennzeichnet, dass** es einen Schritt der Auswahl einer Betriebsart zwischen mindestens einer "Kühlung" genannten Betriebsart und einer "Heizung" genannten Betriebsart enthält, so dass:
- in der "Kühlung" genannten Betriebsart das Kühlfluid am Ausgang des Kompressors (11) den Verflüssiger (13), das erste Expansionsorgan (15) und den Austauscher zur thermischen Konditionierung (17) durchquert, und
- in der "Heizung" genannten Betriebsart das Kühlfluid am Ausgang des Kompressors (11) das erste Expansionsorgan (15) umgeht und den Austauscher zur thermischen Konditionierung (17) durchquert.

13. Verfahren zur thermischen Regelung einer Batterie (7) nach Anspruch 12, durchgeführt von einer Heizungs-, Lüftungs- und/oder Klimaanlage (1), die ein erstes Steuerventil (19), das am Ausgang des Kompressors (11) angeordnet ist, und ein zweites Steuerventil (21) enthält, das stromaufwärts vor dem ersten Expansionsorgan (15) in Strömungsrichtung des Kühlfluids angeordnet ist, **dadurch gekennzeichnet, dass** in der "Kühlung" genannten Betriebsart das Verfahren enthält:
- einen Schritt des Umschaltens des ersten Steuerventils (19), so dass das Kühlfluid vom Kompressor (11) zum Verflüssiger (13) strömt, und
- einen Schritt des Umschaltens des zweiten Steuerventils (21), so dass das Kühlfluid vom Verflüssiger (13) zum ersten Expansionsorgan (15) und durch den Austauscher zur thermischen Konditionierung (17) strömt.

14. Verfahren zur thermischen Regelung einer Batterie (7) nach Anspruch 12 oder 13, durchgeführt von einer Heizungs-, Lüftungs- und/oder Klimaanlage (1), die ein erstes Steuerventil (19), das am Ausgang des Kompressors (11) angeordnet ist, und ein zweites Steuerventil (21) enthält, das stromaufwärts vor dem ersten Expansionsorgan (15) in Strömungsrichtung des Kühlfluids angeordnet ist,
**dadurch gekennzeichnet, dass** in der "Heizung" genannten Betriebsart das Verfahren enthält:
- einen Schritt des Umschaltens des ersten Steuerventils (19), so dass das Kühlfluid vom Kompressor (11) zum zweiten Steuerventil (21) strömt,
- einen Schritt des Umschaltens des zweiten Steuerventils (21), so dass das Kühlfluid vom ersten Steuerventil (19) zum Austauscher zur thermischen Konditionierung (17) fließt.

## Claims

1. Heating, ventilation and/or air conditioning installation (1) comprising a battery pack (7) and a thermal regulation device (9) for a battery (7) of a motor vehicle comprising at least a compressor (11), a condenser (13), a first expansion member (15), a thermal conditioning exchanger (17) for exchange of heat between a refrigerant and a heat-transfer fluid (FC), and switching means,
the thermal regulation device (9) comprising at least one bypass leg (9b) connecting an outlet of the compressor (11) to an inlet of the thermal conditioning exchanger (17), bypassing the condenser (13), the switching means comprising a least a second control valve (21), positioned upstream of the first expansion member (15), in the direction in which the refrigerant circulates and the thermal regulation device (9) comprising a cooling leg (9c) positioned between the condenser (13) and the second control valve (21), this cooling leg (9c) being positioned in such a way that when the refrigerant passes through it, the refrigerant leaving the condenser (13) circulating towards the first expansion member (15) and the thermal conditioning exchanger (17),
**characterized in that** the heat transfer fluid (FC) is circulated in closed loop in the battery pack (7).

2. Heating, ventilation and/or air conditioning installation (1) according to Claim 1, **characterized in that** the switching means comprise at least a first control valve (19) positioned at the outlet of the compressor (11).

3. Heating, ventilation and/or air conditioning installation (1) according to any one of the preceding claims, **characterized in that** the cooling leg (9c) comprises a nonreturn valve (25) positioned between the condenser (13) and the second control valve (21).

4. Heating, ventilation and/or air conditioning installation (1) according to any one of the preceding claims, **characterized in that** the thermal regulation device (9) comprises at least a second expansion member (23), positioned upstream of the thermal conditioning exchanger (17) in the direction in which the refrigerant circulates.

5. Heating, ventilation and/or air conditioning installation (1) according to Claim 4, **characterized in that** the second expansion member (23) is positioned in parallel with the first expansion member (15).

6. Heating, ventilation and/or air conditioning installation (1) according to any one of the preceding claims, **characterized in that** it comprises an air conditioning loop (9a) for an interior air flow (FA3) which is intended to be distributed into a vehicle interior, comprising at least the compressor (11) and the condenser (13).

7. Heating, ventilation and/or air conditioning installation (1) according to Claim 6, **characterized in that** the air conditioning loop (9c) comprises at least one expansion member (27) interposed between the condenser (13) and an evaporator (5).

8. Heating, ventilation and/or air conditioning installation (1) according to any one of the preceding claims, **characterized in that** the heat-transfer fluid (FC) is a flow of thermal conditioning air (FA2).

9. Heating, ventilation and/or air conditioning installation (1) according to Claim 8, **characterized in that** the thermal regulation device (9) comprises a blower to blow the flow of thermal conditioning air (FA2) towards the thermal conditioning exchanger (17).

10. Heating, ventilation and/or air conditioning installation (1) according to any one of Claims 1 to 7, **characterized in that** the heat-transfer fluid (FC) is a heat-transfer liquid (LC).

11. Heating, ventilation and/or air conditioning installation (1) according to Claim 10, **characterized in that** the heat-transfer liquid (LC) circulates in circulation canals (33) able to be in contact with cells (8) of the battery (7).

12. Method for the thermal regulation of a battery (7) of a motor vehicle implemented by a heating, ventilation and/or air conditioning installation (1) according to any one of the preceding claims, **characterized in that** it comprises a step of selecting a mode of operation from between at least a mode of operation referred to as "cooling" and a mode of operation referred to as "heating", so that:
- in the mode of operation referred to as "cooling" the refrigerant, leaving the compressor (11), passes through the condenser (13), the first expansion member (15) and the thermal conditioning exchanger (17), and
- in the mode operation referred to as "heating", the refrigerant leaving the compressor (11) bypasses the first expansion member (15) and passes through the thermal conditioning exchanger (17).

13. Method for the thermal regulation of a battery (7) according to Claim 12, implemented by heating, ventilation and/or air conditioning installation (1) comprising a first control valve (19) positioned at the outlet of the compressor (11) and a second control valve (21) positioned upstream of the first expansion member (15) in the direction in which the refrigerant circulates,
**characterized in that**, in the mode of operation referred to as "cooling", the method comprises:
- a step of switching the first control valve (19) over so that the refrigerant circulates from the compressor (11) towards the condenser (13), and
- a step of switching the second control valve (21) over so that the refrigerant circulates from the condenser (13) towards the first expansion member (15) and through the thermal conditioning exchanger (17).

14. Method for the thermal regulation of a battery (7) according to Claim 12 or 13, implemented by heating, ventilation and/or air conditioning installation (1) comprising a first control valve (19) positioned at the outlet of the compressor (11) and a second control valve (21) positioned upstream of the first expansion member (15) in the direction in which the refrigerant circulates,
**characterized in that**, in the mode of operation referred to as "heating", the method comprises:
- a step of switching the first control valve (19) over so that the refrigerant circulates from the compressor (11) towards the second control valve (21),
- a step of switching the second control valve (21) over so that the refrigerant circulates from the first control valve (19) towards the thermal conditioning exchanger (17).
